# EUROPEAN PATENT APPLICATION

(11) **EP 2 383 870 A1**
(43) Date of publication of application: **02.11.2011**
(21) Application number: 09834549.9
(22) Date of filing: 06.03.2009
(51) Int. Cl.: H02K 7/10, H02K 7/116, H02K 23/60

(54) **COAXIAL INVERSION CORELESS GENERATOR**

(30) Priority: 25.12.2008 JP 2008329144
(71) Applicant: Noai Co. Ltd., Niigata 950-0952 (JP)
(72) Inventor: HARA, Akio, Niigata-shi Niigata 950-0965 (JP)
(74) Representative: Barth, Stephan Manuel
(86) International application number: PCT/JP2009/054254
(87) International publication number: WO 2010/073743

(57) **Abstract**

Provided is a space-saving coaxial invers ion coreless generator of a simple structure wherein a high output can be obtained by utilizing the rotational force of a wind turbine, for example. The coaxial inversion coreless generator (1) comprises a generator shaft (13) supported fixedly, an outer rotor (12) with a magnet (24) supported rotatably by the generator shaft (13) and driven by wind force, a coreless coil body (14) that is housed in the outer rotor (12) coaxially tlierewith while being sup-ported rotatably by the generator shaft (13) and is provided with a coil portion (41) arranged in association with the magnet (24), and a reversing gear (51) supported by the generator shaft (13) and rotating the coreless coil body (14) reversely according to rotation of the outer rotor (12) by interlocking with circular gears (26, 45) arranged both in the outer rotor (12) and the coreless coil body (14)circularly, whereby the generator is constituted to take out a power generation output according to an increase in relative speed between the magnet (24) and the coil portion (41) caused by reverse rotations of the outer rotor (12) and the coreless coil body (14).

## Description

### TECHNICAL FIELD

The present invention relates to a coaxial inversion coreless generator. More particularly, the present invention relates to a coaxial inversion coreless generator that in the utilization of, for example, the torque of a wind turbine, can attain simple structuring and space saving and can realize a large output.

### BACKGROUND ART

In recent years, power generators utilizing various natural energies, such as wind energy and solar energy, are attracting attention from the viewpoint of the reduction of carbon dioxide emission, the reduction of fossil fuel consumption, and the like.

With respect to the wind turbine generator utilizing wind energy among natural energies, for example, one configured to increase the rotational speed of a wind turbine by means of a speed-up gear and transmit the increased rotational speed to a power generation section so that a power generation output greater than in the use of a power generator utilizing only the torque of a wind turbine can be gained by the power generation section has been proposed.

However, in this wind turbine generator, the speed-up gear and the power generation section are installed separately from each other. This is unfavorable from the viewpoint of space saving.

Patent reference 1 proposes, as a technology relating to the present invention, a generator with a rotational speed increasing function utilizing the torque of a wind turbine. This generator is equipped with a pair of power generation rotors and configured to perform power generation by relative rotations thereof. This generator is further equipped with a transmission mechanism composed of a planetary gear mechanism that is capable of transmitting the rotation of a rotor as the reverse rotation of the other rotor. Thus, the rotors perform reverse relative rotations by the torque inputted in a rotor, thereby inducing power generation.

In this generator with a rotational speed increasing function, because of the employment of a transmission mechanism composed of a planetary gear mechanism, the structure of the transmission mechanism becomes complex.
Patent reference 1: JP 2005-287215 A

### DISCLOSURE OF THE INVENTION

### PROBLEM TO BE SOLVED BY THE INVENTION

The problem to be solved by the invention is the absence of any coaxial inversion coreless generator that in the utilization of, for example, the torque of a wind turbine, can attain simple structuring and space saving and can realize a large output.

### MEANS FOR SOLVING THE PROBLEM

The most characteristic feature of the coaxial inversion coreless generator according to the present invention is as follows. The coaxial inversion coreless generator comprises a fixedly supported generator shaft; an outer rotor with magnet rotatably supported by the generator shaft, which outer rotor is configured to be driven by external force to thereby rotate; a coreless coil body that is rotatably housed in the outer rotor in a coaxial arrangement while being supported by the generator shaft, which coreless coil body is provided with a coil portion arranged correspondingly to the magnet; and a reversing gear axially supported by the generator shaft, which reversing gear is capable of reversely rotating the coreless coil body in accordance with the rotation of the outer rotor by interlocking with circular gears disposed in a circular arrangement in both the outer rotor and the coreless coil body, wherein any power generation output according to an increase in relative speed between the magnet and the coil portion caused by reverse rotations of the outer rotor and the coreless coil body is withdrawn through a current collector fixedly disposed around the generator shaft from a coil portion output terminal of the coreless coil body.

### EFFECT OF THE INVENTION

The invention of claim 1 provides a coaxial inversion coreless generator wherein a relative speed of, for example, two times that of a conventional generator including a rotor and a stator can be produced between the outer rotor and the coreless coil body of the coaxial inversion structure, thereby realizing a power generation output greater than in the use of a conventional wind power generator.

The invention of claim 2 not only exerts the same effect as attained by the invention of claim 1 but also can provide a coaxial inversion coreless generator wherein the coreless coil body has a multistaged arrangement so that especially when the wind energy is large, an increased power generation output can be realized.

The invention of claim 3, based on an inner rotor type structure, can provide a coaxial inversion coreless generator wherein a power generation output greater than in the use of a conventional wind power generator can be realized as in the invention of claim 1.

The invention of claim 4, based on an inner rotor type structure, not only exerts the same effect as attained by the invention of claim 3 but also can provide a coaxial inversion coreless generator wherein the coreless coil body has a multistaged arrangement so that especially when the wind energy is large, an increased power generation output can be realized.

### BEST MODE FOR CARRYING OUT THE INVENTION

An object of the present invention is to provide a coaxial inversion coreless generator that in the utilization of, for example, the torque of a wind turbine, can attain simple structuring and space saving and can realize a large output.

This object has been attained by the coaxial inversion coreless generator of the present invention comprising a fixedly supported generator shaft; an outer rotor rotatably supported by the generator shaft, the outer rotor configured to be driven by external force to thereby rotate, which outer rotor is provided thereinside with multistaged accommodation chambers arranged in a direction along the generator shaft, each of the accommodation chambers provided on its wall surface with a magnet; multistaged coreless coil bodies that are respectively housed in the accommodation chambers in a coaxial arrangement while being rotatably supported by the generator shaft, which multistaged coreless coil bodies are each provided with a coil portion arranged correspondingly to the magnet; and multistaged reversing gears axially supported by the generator shaft, which multistaged reversing gears are capable of reversely rotating the coreless coil bodies in accordance with the rotation of the outer rotor by interlocking with circular gears disposed in a circular arrangement in both the outer rotor and each of the multistaged coreless coil bodies, wherein any power generation output according to an increase in relative speed between the magnet and the coil portion caused by reverse rotations of the outer rotor and each of the coreless coil bodies is withdrawn through each of multistaged current collectors fixedly disposed around the generator shaft from a coil portion output terminal of each of the coreless coil bodies.

### EXAMPLE

The coaxial inversion coreless generators according to embodiments of the present invention will be described in detail below with reference to the appended drawings.

### (Embodiment 1)

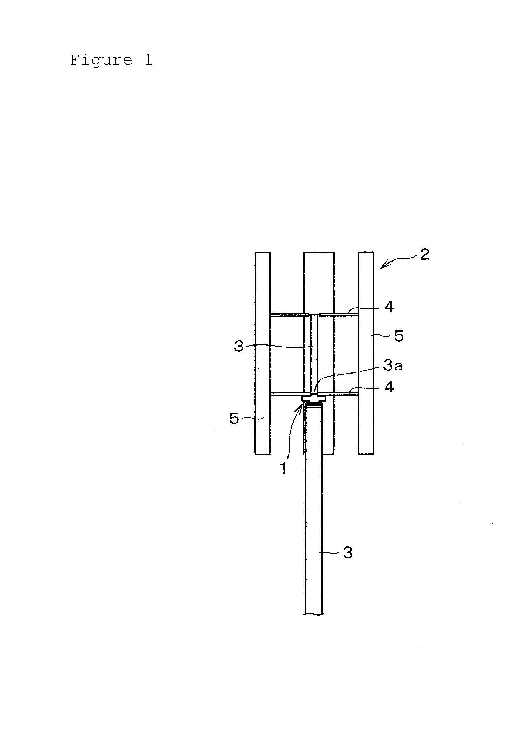

The coaxial inversion coreless generator 1 according to Embodiment 1 of the present invention will be described with reference to FIGS. 1 to 3.

Referring to FIG. 1, the coaxial inversion coreless generator 1 according to Embodiment 1 is disposed between the lower end of, for example, a Giromill type (vertical type) wind turbine 2 and the upper end of a pole 3 supporting the wind turbine 2 so as to hold the same at a given height from the ground. The coaxial inversion coreless generator 1 is so configured as to gain a power generation output by utilizing the torque of the wind turbine 2 rotating by means of wind energy. The wind turbine 2 is so structured that, for example, three blades 5 are attached to a wind turbine shaft 3 by means of arms 4, and that the lower end portion 3a of the wind turbine shaft 3 is attached to the coaxial inversion coreless generator 1.

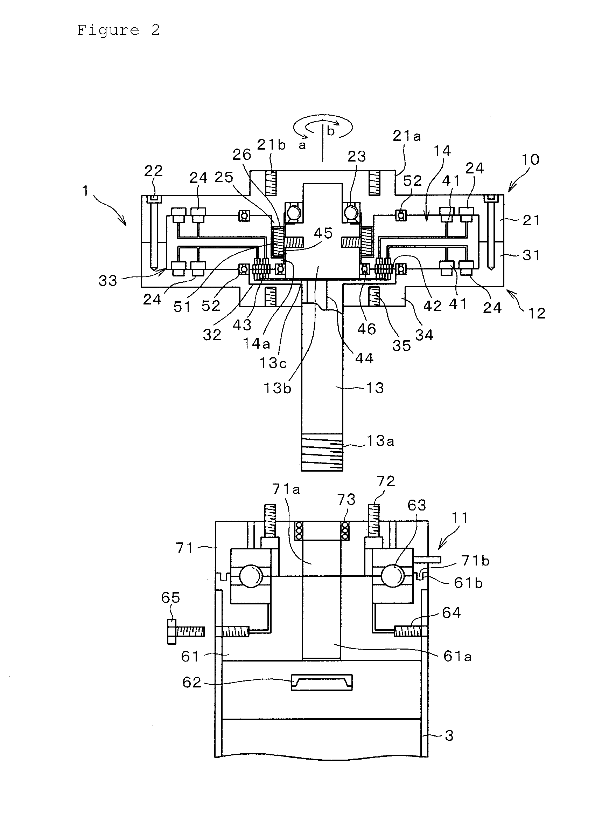

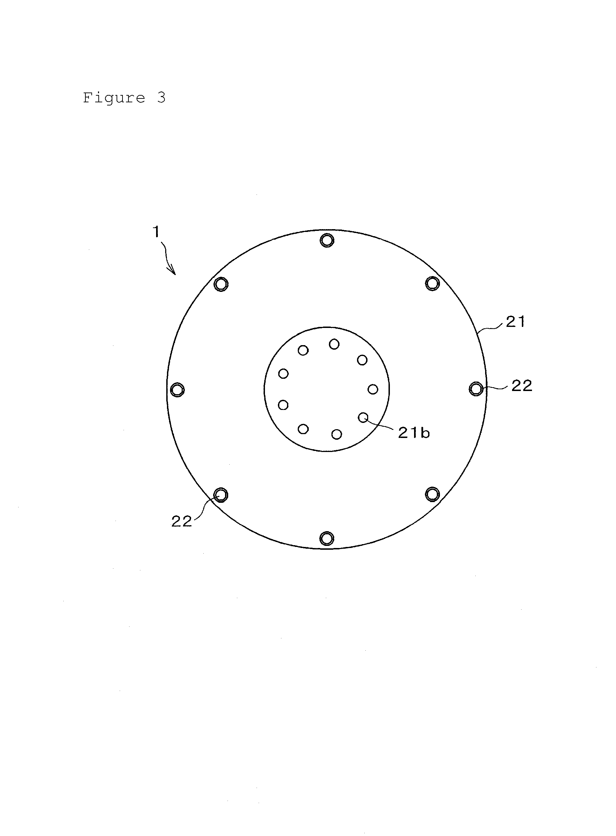

The coaxial inversion coreless generator 1 according to Embodiment 1 will be described in greater detail with reference to FIGS. 2 and 3.

The coaxial inversion coreless generator 1 according to Embodiment 1 includes a generator main body 10 and a shaft supporting body 11 configured to rotatably support the generator main body 10.

The generator main body 10 includes an outer rotor 12 rotated by the torque of the wind turbine 2, a generator shaft 13 axially supporting the center portion of the outer rotor 12 that is configured to rotate the outer rotor 12 and a disk-shaped coreless coil body (coil bundle compressed into a disk shape) 14 housed in the outer rotor 12 while its center portion is supported by the generator shaft 13.

The generator shaft 13 is provided at its lower end with a screw thread 13a and provided on its upper end side with a large-diameter portion 13b. The large-diameter portion 13b is provided on its lower side with a projecting disk portion 13c.

In the outer rotor 12, a pan/disk-shaped upper rotor 21 with an open lower side abuts in a vertical arrangement on a pan/disk-shaped lower rotor 31 with an open upper side. These rotors are fixed together at locations close to the outer circumferences thereof by means of a multiplicity of circularly arranged fixing bolts 22.

With respect to the upper rotor 21 as a constituent of the outer rotor 12, the upper end portion of the generator shaft 13 is fitted in the center area lower side thereof. The center portion thereof is provided with an upper projecting cylindrical wind-turbine attaching portion 21a.

The wind-turbine attaching portion 21a is provided with a multiplicity of circularly arranged screw holes 21b. The wind-turbine attaching portion 21a is caused to abut on the lower end portion 3a of the wind turbine shaft 3, and by means of attaching bolts not shown, the upper rotor 21 and the lower end portion 3a of the wind turbine shaft 3 are bonded together to thereby transmit the torque of the wind turbine shaft 3.

A main bearing 23 is disposed between the upper face side of the large-diameter portion 13b of the generator shaft 13 and the inner bottom portion of the upper rotor 21 close to the upper face side, thereby axially supporting the upper rotor 21, thus the outer rotor 12.

A circular projecting portion 25 having an inside diameter slightly larger than the large-diameter portion 13b is provided in a location outside the main bearing 23 on the inner bottom portion of the upper rotor 21. A circular gear 26 is provided on the entire circumference of the inferior end surface of the circular projecting portion 25.

A required number of magnets 24 are circularly embedded in the inner bottom portion of the upper rotor 21 at its location close to the outer circumference thereof in a fashion such that the end face thereof faces the inner bottom face.

The lower rotor 31 is formed into a configuration approximately vertically symmetric to that of the upper rotor 21. Illustratively, the lower rotor 31 at its center area upper face is provided with a circular recessed tier portion 32 configured to allow the projecting disk portion 13c to gain entrance thereinto. The generator shaft 13 passes through the center area of the circular recessed tier portion 32.

A required number of magnets 24 are circularly embedded in the inner bottom portion of the lower rotor 31 at its location close to the outer circumference thereof in a fashion such that the end face thereof faces the inner bottom face and in a fashion such that they are arranged opposedly to the magnets 24 of the upper rotor 21.

The upper rotor 21 and the lower rotor 31 cooperate to provide thereinside an accommodation chamber 33 for accommodating a coreless coil body 14.

The lower face side of the lower rotor 31 at its center area is provided with a downward projecting cylindrical attaching portion 34. This attaching portion 34 is provided with circularly arranged screw holes 35.

The coreless coil body 14 is disposed coaxially with the outer rotor 12 in the accommodation chamber 33. The coreless coil body 14 at its center area is provided with an upper hole with an inside diameter allowing the circular projecting portion 25 of the upper rotor 21 to gain entrance thereinto and a lower hole having a diameter slightly larger than that of the large-diameter portion 13b of the generator shaft 13 so as to allow the large-diameter portion 13b to pass therethrough.

The coreless coil body 14 is rotatably supported by the generator shaft 13 by means of a bearing 46 disposed between the lower end outer circumference of the large-diameter portion 13b and the lower hole of the coreless coil body 14.

The coreless coil body 14 on its upper face is provided with a coil portion 41 arranged correspondingly to and close to the magnet 24 embedded in the upper rotor 21. Also, the coreless coil body 14 on its lower face is provided with a coil portion 41 arranged correspondingly to and close to the magnet 24 embedded in the lower rotor 31.

Coil portion output terminals 42 of the upper and lower coil portions 41 of the coreless coil body 14 are disposed in a location facing the lower face of the coreless coil body 14 and in a fashion opposed to the projecting disk portion 13c of the generator shaft 13 positioned in the circular recessed tier portion 32.
In place of the coil portion output terminals 42 combined with the brushes 43, use can be made of, for example, a brushless current collector or a sparkless current collector.

Power generation output from the generator main body 10 is withdrawn through the brushes (current collector) 43 disposed correspondingly to the coil portion output terminals 42 provided on the upper face of the projecting disk portion 13c and through an output cable 44 connected to the brushes 43.

A circular projecting portion 14a defining the lower hole of the coreless coil body 14 on its upper face side (upper hole side) is provided on the entire circumference thereof with a circular gear 45 similar to the circular gear 26 of the circular projecting portion 25.

A plurality of reversing gears 51 located in the upper hole and having their rotating shafts arranged in a horizontal direction are attached to the outer circumference of the large-diameter portion 13b of the generator shaft 13. The reversing gears 51 interlock with the circular gear 26 and the circular gear 45.

By virtue of this arrangement, when the outer rotor 12 is rotated in the direction of arrow a as shown in FIG. 2, the coreless coil body 14 is reversely rotated by means of the reversing gears 51 in the direction of arrow b as shown in FIG. 2.

Namely, the outer rotor 12 and the coreless coil body 14 are configured to conduct coaxial inversion by means of the reversing gears 51.

The shaft supporting body 11 is configured to allow the generator shaft 13 to fit through its center hole 61a and protrude downward, and has a stacked structure composed of a fixed support 61 configured to fixedly support the generator shaft 13 by screwing a nut 62 on the screw thread 13a of the generator shaft 13 from downside and a rotary support 71 disposed in close relationship on the fixed support 61 which is provided in its center area with a through-hole 71a having the same diameter as that of the center hole 61a, through which the generator shaft 13 passes.

Namely, an arrangement is made such that the rotary support 71 is rotatably supported by the fixed support 61 by means of a bearing 63 disposed therebetween, and such that the rotary support 71 can be smoothly rotated in close relationship on the fixed support 61 by fitting a circular ridge 71b provided on the lower face outer circumference region of the rotary support 71 in a circular groove 61b provided on the upper face outer circumference region of the fixed support 61.

The fixed support 61 at its side face is provided with screw holes 64 arranged orthogonal to the axial direction of the center hole 61a. An arrangement is made such that the shaft supporting body 11 is attached to the upper end portion of the pole 3 by means of bolts 65 by fitting the upper end portion of the pole 3 from downside of the fixed support 61.

The rotary support 71 is provided with attaching bolts 72 arranged correspondingly to the screw holes 35 of the attaching portion 34 of the lower rotor 31. In the stage prior to assembling the rotary support 71 and the fixed support 61, the rotary support 71 is attached to the lower rotor 31. Thereafter, the fixed support 61 is fitted to the rotary support 71.

A support bearing 73 for the generator shaft 13 is disposed in the upper end portion of the through-hole 71a of the rotary support 71.

In FIG. 2, numeral 52 denotes roller bearings respectively disposed between the upper rotor 21 and the coreless coil body 14 and between the lower rotor 31 and the coreless coil body 14.

In the coaxial inversion coreless generator 1 according to Embodiment 1, when the wind turbine 2 is rotated by wind energy in the direction of, for example, arrow a as shown in FIG. 2, the outer rotor 12 is also rotated in the direction of arrow a. The torque of the outer rotor 12 is transmitted to the reversing gears 51. As a result, the coreless coil body 14 is rotated by means of the reversing gears 51 in the direction of arrow b as shown in FIG. 2 (coaxial inversion).

Consequently, an increased power generation output according to an increase in relative speed between the magnets 24 and the coil portions 41 can be withdrawn outside from the coil portion output terminals 42 of the coreless coil body 14 through the brushes 43 and the output cable 44.

More particularly, the coaxial inversion coreless generator 1 according to Embodiment 1 is configured so that the coaxial inversion of the outer rotor 12 and the coreless coil body 14 can be attained by use of a simple element viz. the reversing gears 51 only in accordance with the rotation of the wind turbine 2. Consequently, a relative speed of, for example, two times that of a conventional generator including a rotor and a stator can be produced between the outer rotor 12 and the coreless coil body 14, thereby realizing a power generation output greater than in the use of a conventional wind power generator under the conditions of identical wind energy.

Specifically, assuming that a power generation output of 100 is obtained at a rotating speed of 100 by a conventional generator, the coaxial inversion coreless generator 1 according to Embodiment 1 can realize a power generation output of 100 at a rotating speed of 50, or a power generation output of 200 at a rotating speed of 100.

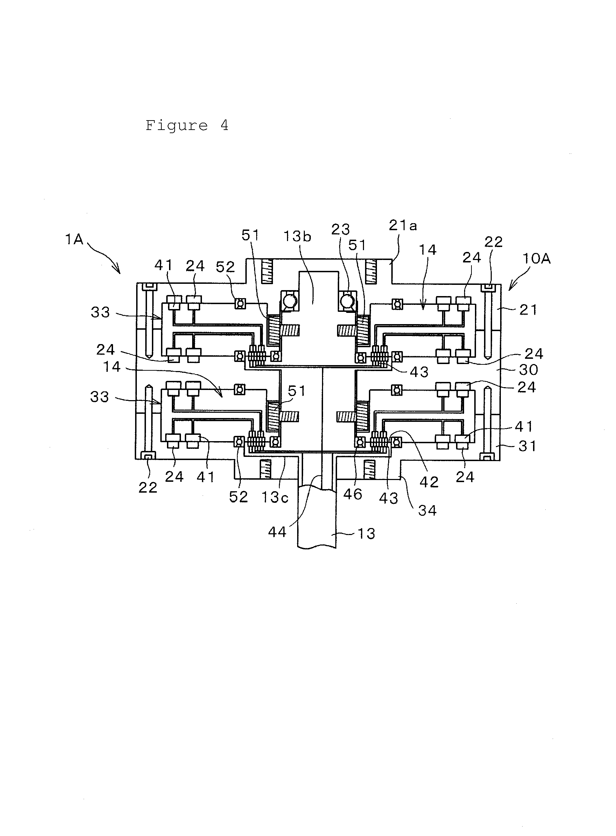

Now, referring to FIG. 4, a coaxial inversion coreless generator 1A being a modified form of the coaxial inversion coreless generator 1 according to Embodiment 1 will described.

Basically, the principle of the coaxial inversion coreless generator 1A being a modified form is the same as that of the foregoing coaxial inversion coreless generator 1, and the structures thereof are also similar to each other. Therefore, like marks are used to refer to like elements thereof, and duplicate detailed description is avoided.

The coaxial inversion coreless generator 1A being a modified form includes a generator main body 10A shown in FIG. 4 in place of the above generator main body 10 of the coaxial inversion coreless generator 1.

In the coaxial inversion coreless generator 1A, use is made of an outer rotor 12A including an upper rotor 21, a lower rotor 31 and, integrally interposed therebetween, an intermediate rotor 30, in which vertically two-staged accommodation chambers 33,33 with the same structure as mentioned above are respectively disposed between the upper rotor 21 and the intermediate rotor 30 and between the intermediate rotor 30 and the lower rotor 31.

As characteristic features, the two accommodation chambers 33 of the outer rotor 12A are respectively provided with two coreless coil bodies 14 with the same structure as mentioned above. In correspondence thereto, the generator shaft 13 is provided with vertically two-staged reversing gears 51 so as to realize coaxial inversion drives of the two coreless coil bodies 14. Further, the generator shaft 13 is provided with vertically two-staged brushes 43, to which an output cable 44 is connected so that any power generation output can be withdrawn through the vertically two-staged brushes 43.

The coaxial inversion coreless generator 1A being a modified form is supported by a shaft supporting body 11 not shown in FIG. 4.

In the use of the coaxial inversion coreless generator 1A being a modified form, as in the use of the coaxial inversion coreless generator 1 according to Embodiment 1, a relative speed of, for example, two times that of a conventional generator including a rotor and a stator can be produced between the outer rotor 12 and each of the coreless coil bodies 14,14, thereby realizing a power generation output greater than in the use of a conventional wind power generator under the conditions of identical wind energy.

As the coaxial inversion coreless generator 1A being a modified form is provided with two-staged coreless coil bodies 14, 14, especially when the wind energy is large, the power generation output produced thereby can be greater than that produced by the coaxial inversion coreless generator 1.

In the above coaxial inversion coreless generator 1A being a modified form, two-staged coreless coil bodies 14,14 are disposed in the outer rotor 12A. This is nonlimiting, and three-staged, four-staged, or further multistaged coreless coil bodies can be disposed in the outer rotor. In these forms as well, the same functions and effects as in the use of the coaxial inversion coreless generator 1A being a modified form can be exerted.

### (Embodiment 2)

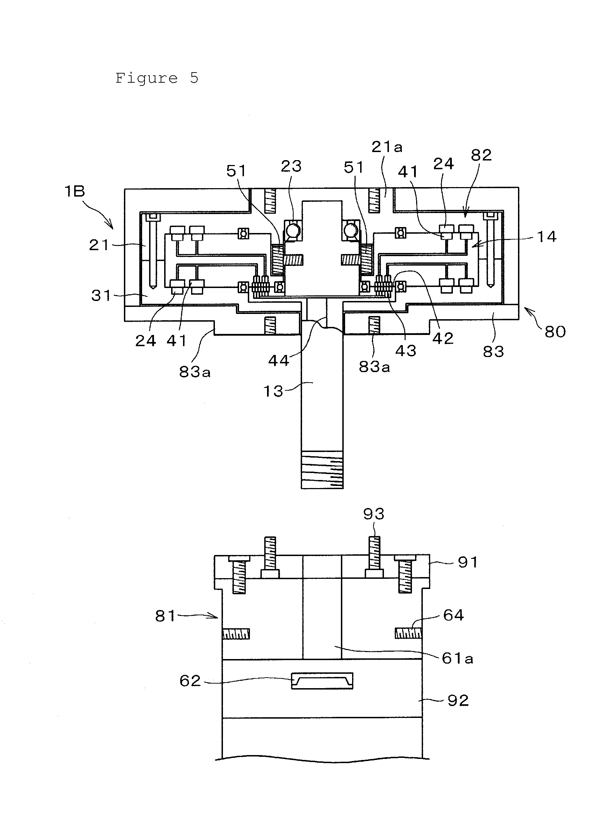

Referring to FIG. 5, the coaxial inversion coreless generator 1B according to Embodiment 2 of the present invention will be described below. The coaxial inversion coreless generator 1B according to Embodiment 2 is characterized by being of an inner rotor type while employing the same structure as that of the coaxial inversion coreless generator 1 according to Embodiment 1.

In FIG. 5, the same marks are used to refer to the same elements as used in the coaxial inversion coreless generator 1 according to Embodiment 1, and duplicate detailed description is avoided.

The coaxial inversion coreless generator 1B according to Embodiment 2 of the present invention is provided with a generator main body 80 of inner rotor type fixedly disposed on a shaft supporting body 81.

The generator main body 80 includes a housing 83; an inner rotor 82 with approximately the same structure as that of the outer rotor 12 rotated by the torque of the wind turbine 2; the same generator shaft 13 as described above axially supporting the center area of the inner rotor 82 and protruding downward from the housing 83, which generator shaft 13 is configured to allow the inner rotor 82 to rotate; and the same disk-shaped coreless coil body 14 as described above housed in the inner rotor 82 in the state that its center area is supported by the generator shaft 13.

The housing 83 is structured so as to cover the upper face, side face and lower face, excluding wind-turbine attaching portion 21a, of an upper rotor 21 as a constituent of the inner rotor 82. The housing 83 on its lower face side is provided with an attaching portion 83a. The attaching portion 83a is arranged so as to be brought into close contact onto the shaft supporting body 81 and integrally attached to the shaft supporting body 81.

The shaft supporting body 81 has substantially the same structure as that of the above shaft supporting body 11. Namely, omitting the structure of the rotary support 71, the shaft supporting body 81 includes, for example, an upper support 91 and a lower support 92 as vertically split structures. The shaft supporting body 81 is structured so as to be unified with the housing 83 by threadedly fitting bolts 93 protruding upward from the interior of the upper support 91 into screw holes 83a provided at the attaching portion 83a of the housing 83.

Other structures are the same as those of the coaxial inversion coreless generator 1 according to Embodiment 1.

In the coaxial inversion coreless generator 1B according to Embodiment 2, as described above, an increased power generation output according to an increase in relative speed between the magnet 24 and the coil portion 41 caused by reverse rotations of the inner rotor 82 and the coreless coil body 14 can be withdrawn outside from the coil portion output terminal 42 of the coreless coil body 14 through the brushes 43 and the output cable 44.

Consequently, as in the coaxial inversion coreless generator 1 according to Embodiment 1, a relative speed of, for example, two times that of a conventional generator including a rotor and a stator can be produced between the inner rotor 82 and the coreless coil body 14, thereby realizing a power generation output greater than in the use of a conventional wind power generator under the conditions of identical wind energy.

In this Embodiment 2 as well, naturally, two-staged, three-staged, four-staged, or further multistaged coreless coil bodies 14 can be disposed in the inner rotor 82. In these forms as well, the same functions and effects as in the use of the coaxial inversion coreless generator 1A being a modified form or the like can be exerted.

### INDUSTRIAL APPLICABILITY

The present invention can be applied to a wind turbine no matter whether it is of vertical shaft type or horizontal shaft type. The coaxial inversion coreless generator of the present invention can find wide applications in not only power generation performed by rotating a wind turbine with natural wind but also power generation performed by rotating a wind turbine with artificial wind, such as air emitted from air-conditioning equipment, etc.

### BRIEF DESCRIPTION OF THE SEVERAL VIEWS OF THE DRAWING

FIG. 1 is a schematic view of a wind power generator equipment including a coaxial inversion coreless generator according to Embodiment 1 of the present invention.
FIG. 2 is a schematic exploded sectional view of a coaxial inversion coreless generator according to Embodiment 1.
FIG. 3 is a schematic plan view of a coaxial inversion coreless generator according to Embodiment 1.
FIG. 4 is a schematic exploded sectional view of a coaxial inversion coreless generator according to a modified form of Embodiment 1.
FIG. 5 is a schematic exploded sectional view of a coaxial inversion coreless generator according to Embodiment 2 of the present invention.

### Definition of Mark

- 1: coaxial inversion coreless generator
- 1A: coaxial inversion coreless generator
- 1B: coaxial inversion coreless generator
- 2: wind turbine
- 3: pole
- 3: wind turbine shaft
- 3a: lower end portion
- 4: arm
- 5: blade
- 10: generator main body
- 11: shaft supporting body
- 12: outer rotor
- 13: generator shaft
- 13a: screw thread
- 13b: large-diameter portion
- 13c: projecting disk portion
- 14: coreless coil body
- 14a: circular projecting portion
- 21: upper rotor
- 21a: wind-turbine attaching portion
- 21b: screw hole
- 22: fixing bolt
- 23: main bearing
- 24: magnet
- 25: circular projecting portion
- 26: circular gear
- 30: intermediate rotor
- 31: lower rotor
- 32: circular recessed tier portion
- 33: accommodation chamber
- 34: attaching portion
- 35: screw hole
- 41: coil portion
- 42: coil portion output terminal
- 43: brush
- 44: output cable
- 45: circular gear
- 46: bearing
- 51: reversing gear
- 52: roller bearing
- 61: fixed support
- 61a: center hole
- 61b: circular groove
- 62: nut
- 63: bearing
- 64: screw hole
- 65: bolt
- 71: rotary support
- 71a: through-hole
- 71b: circular ridge
- 72: attaching bolt
- 73: support bearing
- 80: generator main body
- 81: shaft supporting body
- 82: inner rotor
- 83: housing
- 83a: attaching portion
- 91: upper support
- 92: lower support
- 93: bolt

## Claims

1. A coaxial inversion coreless generator comprising:
a fixedly supported generator shaft,
an outer rotor with magnet rotatably supported by the generator shaft, which outer rotor is configured to be driven by external force to thereby rotate,
a coreless coil body that is rotatably housed in the outer rotor in a coaxial arrangement while being supported by the generator shaft, which coreless coil body is provided with a coil portion arranged correspondingly to the magnet, and
a reversing gear axially supported by the generator shaft, which reversing gear is capable of reversely rotating the coreless coil body in accordance with the rotation of the outer rotor by interlocking with circular gears disposed in a circular arrangement in both the outer rotor and the coreless coil body,
wherein any power generation output according to an increase in relative speed between the magnet and the coil portion caused by reverse rotations of the outer rotor and the coreless coil body is withdrawn through a current collector fixedly disposed around the generator shaft from a coil portion output terminal of the coreless coil body.

2. A coaxial inversion coreless generator comprising:
a fixedly supported generator shaft,
an outer rotor rotatably supported by the generator shaft, the outer rotor configured to be driven by external force to thereby rotate, which outer rotor is provided thereinside with multistaged accommodation chambers arranged in a direction along the generator shaft, each of the accommodation chambers provided on its wall surface with a magnet,
multistaged coreless coil bodies that are respectively housed in the accommodation chambers in a coaxial arrangement while being rotatably supported by the generator shaft, which multistaged coreless coil bodies are each provided with a coil portion arranged correspondingly to the magnet, and
multistaged reversing gears axially supported by the generator shaft, which multistaged reversing gears are capable of reversely rotating the coreless coil bodies in accordance with the rotation of the outer rotor by interlocking with circular gears disposed in a circular arrangement in both the outer rotor and each of the multistaged coreless coil bodies,
wherein any power generation output according to an increase in relative speed between the magnet and the coil portion caused by reverse rotations of the outer rotor and each of the coreless coil bodies is withdrawn through each of multistaged current collectors fixedly disposed around the generator shaft from a coil portion output terminal of each of the coreless coil bodies.

3. A coaxial inversion coreless generator comprising:
a fixedly arranged housing,
a generator shaft fixedly supported in the housing,
an inner rotor with magnet rotatably supported by the generator shaft in the housing, which inner rotor is configured to be driven by external force to thereby rotate,
a coreless coil body that is housed in the housing in a coaxial arrangement so as to be rotatable by the generator shaft, which coreless coil body is provided with a coil portion arranged correspondingly to the magnet, and
a reversing gear axially supported by the generator shaft, which reversing gear is capable of reversely rotating the coreless coil body in accordance with the rotation of the inner rotor by interlocking with circular gears disposed in a circular arrangement in both the inner rotor and the coreless coil body,
wherein any power generation output according to an increase in relative speed between the magnet and the coil portion caused by reverse rotations of the inner rotor and the coreless coil body is withdrawn through a current collector fixedly disposed around the generator shaft from a coil portion output terminal of the coreless coil body.

4. A coaxial inversion coreless generator comprising:
a fixedly arranged housing,
a generator shaft fixedly supported in the housing,
an inner rotor rotatably supported by the generator shaft in the housing, the inner rotor configured to be driven by external force to thereby rotate, which inner rotor is provided thereinside with multistaged accommodation chambers arranged in a direction along the generator shaft, each of the accommodation chambers provided on its wall surface with a magnet,
multistaged coreless coil bodies that are respectively housed in the accommodation chambers in a coaxial arrangement while being rotatably supported by the generator shaft, which multistaged coreless coil bodies are each provided with a coil portion arranged correspondingly to the magnet, and
multistaged reversing gears axially supported by the generator shaft, which multistaged reversing gears are capable of reversely rotating the coreless coil bodies in accordance with the rotation of the inner rotor by interlocking with multistaged circular gears disposed in a circular arrangement in both the inner rotor and each of the coreless coil bodies,
wherein any power generation output according to an increase in relative speed between the magnet and the coil portion caused by reverse rotations of the inner rotor and each of the coreless coil bodies is withdrawn through each of multistaged current collectors fixedly disposed around the generator shaft from a coil portion output terminal of each of the coreless coil bodies.
